Europäisches Patentamt

European Patent Office

Office européen des brevets

(19)

(11) Numéro de publication: **0 070 205**
**A1**

(12) # DEMANDE DE BREVET EUROPEEN

(21) Numéro de dépôt: **82400275.2**

(22) Date de dépôt: **17.02.82**

(51) Int. Cl.³: **A 47 J 45/06**

(30) Priorité: **17.06.81 FR 8111905**

(43) Date de publication de la demande:
**19.01.83 Bulletin 83/3**

(84) Etats contractants désignés:
**BE DE GB IT LU NL**

(71) Demandeur: **SEB S.A. Société Anonyme française**

**F-21260 Selongey(FR)**

(72) Inventeur: **Bucari, Claude Charles**
**5, Montée de la Dame**
**F-74150 Rumilly(FR)**

(74) Mandataire: **Bouju, André**
**38 Avenue de la Grande Armée**
**F-75017 Paris(FR)**

(54) **Dispositif pour fixer une poignée à un ustensile culinaire et procédé s'y rapportant.**

(57) Le dispositif pour fixer une poignée (1) à un ustensile culinaire (2) comprend un goujon métallique (3) fixé à l'ustensile et comportant un alésage (6) recevant un rivet métallique (5) assurant la fixation de la poignée (1) au goujon (3).

L'alésage (6) du goujon (3) comporte des moyens (13) assurant une déformation radiale du rivet (5) et un ancrage de celui-ci dans l'alésage du goujon sous l'effet d'une force (F) appliquée axialement sur le rivet (5).

Utilisation pour fixer des poignées à des casseroles ou des poêles.

FIG_3

EP 0 070 205 A1

Croydon Printing Company Ltd.

"Dispositif pour fixer une poignée à un ustensile culinaire et procédé s'y rapportant"

La présente invention concerne un dispositif pour fixer une poignée à un ustensile culinaire tel que casserole, poêle, marmite de cuisson et analogue.

L'invention vise également le procédé pour fixer une poignée à un ustensile culinaire au moyen du dispositif précité.

Les dispositifs de fixation connus de ce type comprennent généralement un goujon métallique fixé par exemple par soudage, à la paroi latérale de l'ustensile, ce goujon comportant un alésage axial taraudé dans lequel est vissée une vis qui est engagée dans un orifice ménagé à l'extrémité de la poignée. Dans le cas de poignées relativement longues, telles que les manches ou queues de casserole ou de poêle, la fixation est consolidée par une embase métallique fixée à l'ustensile autour du goujon et dans laquelle est emboîtée l'extrémité de la poignée.

De tels dispositifs de fixation présentent plusieurs inconvénients. L'inconvénient majeur réside dans le fait qu'à l'usage, la vis tend à se desserrer en entraînant un jeu entre la poignée et le goujon qui risque de détériorer le taraudage du goujon et le filetage de la vis en rendant ainsi l'ustensile inutilisable ou dangereux à manipuler.

De plus, la fabrication et le montage sur les ustensiles de ces dispositifs sont relativement onéreux du fait des coûts élevés liés aux opérations de taraudage, de filetage et de serrage des vis.

Le but de la présente invention est de créer des dispositifs de fixation qui évitent l'utilisation de vis et qui permettent une fixation indesserrable et irréversible, tout en étant peu onéreux et faciles à monter.

Le dispositif de fixation visé par l'invention comprend un goujon métallique destiné à être fixé à l'ustensile, et un rivet métallique fixé ou destiné à être fixé à ce goujon, ce rivet comportant des moyens pour permettre la fixation de la poignée à ce rivet.

Suivant l'invention, ce dispositif est caractérisé en ce que le rivet comporte à l'une de ses extrémités une partie déformable radialement sous l'effet d'une force appliquée axialement sur le rivet et permettant de rendre ce rivet solidaire de la poignée et du goujon.

Cette déformation radiale du rivet permet d'obtenir une fixation solide et irréversible de la poignée, au moyen d'une seule opération à savoir l'application d'une force axiale sur le rivet.

Dans une réalisation avantageuse du dispositif conforme à l'invention, le goujon métallique destiné à être fixé à l'ustensile porte un alésage pour recevoir un rivet métallique servant à fixer la poignée à ce goujon, le diamètre de ce rivet étant sensiblement identique à celui de cet alésage, l'alésage du goujon comportant des moyens qui assurent une déformation radiale du rivet et un ancrage de celui-ci dans l'alésage du goujon sous l'effet d'une force appliquée axialement sur le rivet.

L'ancrage réalisé dans l'alésage du goujon qui résulte de la déformation radiale du rivet permet d'obtenir une fixation solide et irréversible de la poignée, au moyen d'une seule opération, à savoir l'application d'une force axiale sur le rivet. Cette force axiale est bien entendu réglée en fonction notamment des métaux ou alliages dans lesquels sont réalisés le goujon et la vis et de la solidité de la fixation que l'on veut obtenir qui dépend elle-même notamment du poids de l'ustensile.

Un tel dispositif de fixation évite ainsi l'utilisation de vis susceptibles de se desserrer à l'usage.

Selon une version particulière de l'invention, à la périphérie du fond de l'alésage du rivet est ménagée une gorge annulaire coaxiale avec l'alésage, le diamètre extérieur de cette gorge étant supérieur à celui de l'alésage, l'extrémité du rivet adjacente au fond de l'alésage comportant un évidement axial qui définit une partie tubulaire, cette dernière étant destinée à pénétrer par déformation au moins en partie dans cette gorge sous l'effet d'une force appliquée axialement sur le rivet.

La pénétration de cette partie tubulaire du rivet dans la gorge annulaire ménagée au fond de l'alésage du goujon assure ainsi une fixation solide et irréversible de la poignée à l'ustensile.

Selon une autre version de l'invention, la surface latérale de l'alésage du goujon comporte au moins un évidement, la surface latérale du rivet étant destinée à pénétrer dans cet évidement par déformation radiale du métal sous l'effet d'une force appliquée axialement sur le rivet.

La déformation de la surface latérale du rivet dans l'évidement de l'alésage du goujon verrouille irréversiblement le rivet dans cet alésage.

Selon une troisième version de l'invention, au fond de l'alésage du goujon est logée une bille métallique présentant un diamètre inférieur à celui de l'alésage, l'extrémité du rivet adjacente au fond de l'alésage comportant un évidement axial définissant une partie tubulaire, cette dernière étant destinée à s'engager autour de la bille par déformation du métal sous l'effet d'une force appliquée radialement sur le rivet.

Dans cette version, l'alésage du goujon ne nécessite aucune opération de taraudage ou de perçage complémentaire. La partie tubulaire du rivet est retenue par déformation de cette dernière et expansion de l'alésage du goujon autour de la bille.

Suivant un autre aspect de l'invention, le procédé conforme à l'invention utilisant l'un quelconque des dispositifs de fixation précités, consiste à appliquer axialement sur la tête du rivet une force comprise entre 500 et 2 000 kg.

Cette force s'est en effet avérée suffisante pour assurer un ancrage fiable du rivet dans l'alésage du goujon, notamment lorsque ces derniers sont réalisés en des métaux courants tels que l'aluminium et l'acier doux ou des métaux présentant des déformabilités comparables.

D'autres particularités et avantages de l'invention apparaîtront encore dans la description ci-après.

Aux dessins annexés donnés à titre d'exemple non limitatif:

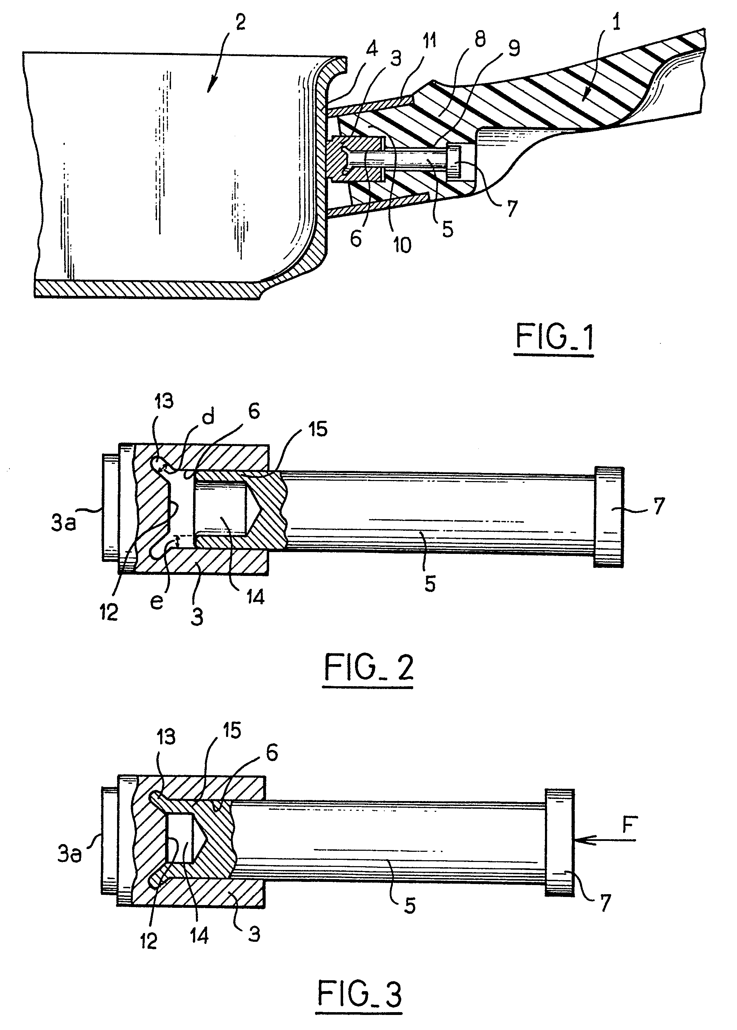

. la figure 1 est une vue en coupe longitudinale avec arrachements d'une casserole comportant une poignée qui est fixée à cette dernière au moyen d'un dispositif conforme à l'invention;

. la figure 2 est une vue en coupe longitudinale partielle et à plus grande échelle montrant le rivet du dispositif selon la figure 1 engagé dans l'alésage du goujon, avant fixation définitive;

. la figure 3 est une vue analogue à la figure 2 montrant la fixation définitive dans le goujon;

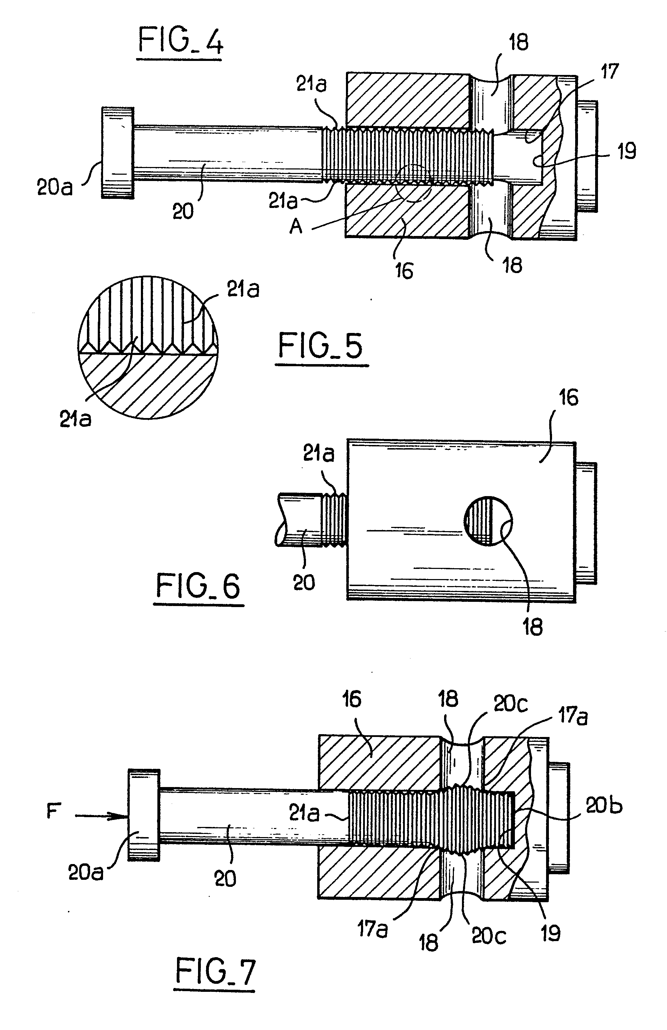

. la figure 4 est une vue en coupe longitudinale partielle d'une seconde version du dispositif conforme à l'invention, avant fixation définitive du rivet dans le goujon;

. la figure 5 est une vue à plus grande échelle du détail A de la figure 4;

. la figure 6 est une vue en plan du dispositif selon la figure 4, après rotation de 90° suivant l'axe du goujon;

. la figure 7 est une vue analogue à la figure 4, montrant la fixation définitive dans le goujon;

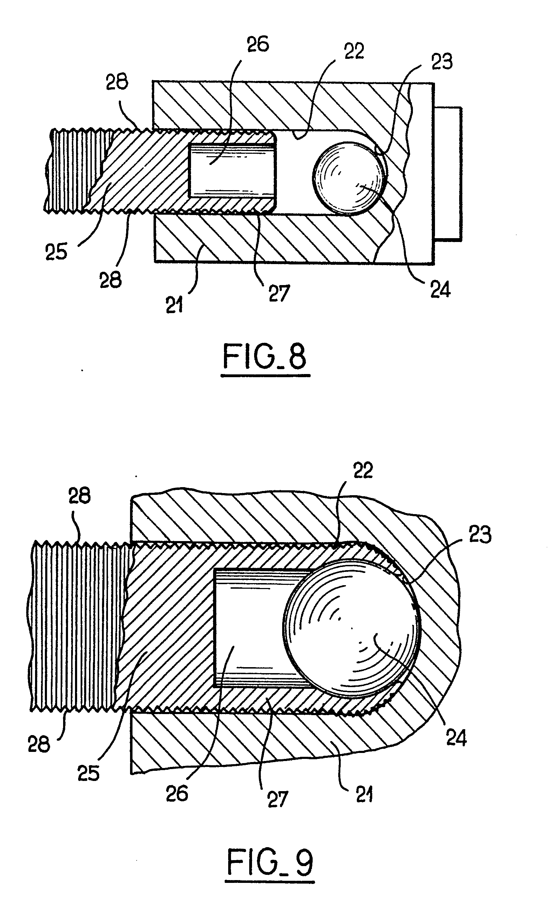

. la figure 8 est une vue en coupe longitudinale partielle d'une troisième version du dispositif conforme à l'invention, avant fixation définitive du rivet dans le goujon;

. la figure 9 est une vue analogue à la figure 8, montrant la fixation définitive du rivet dans le goujon;

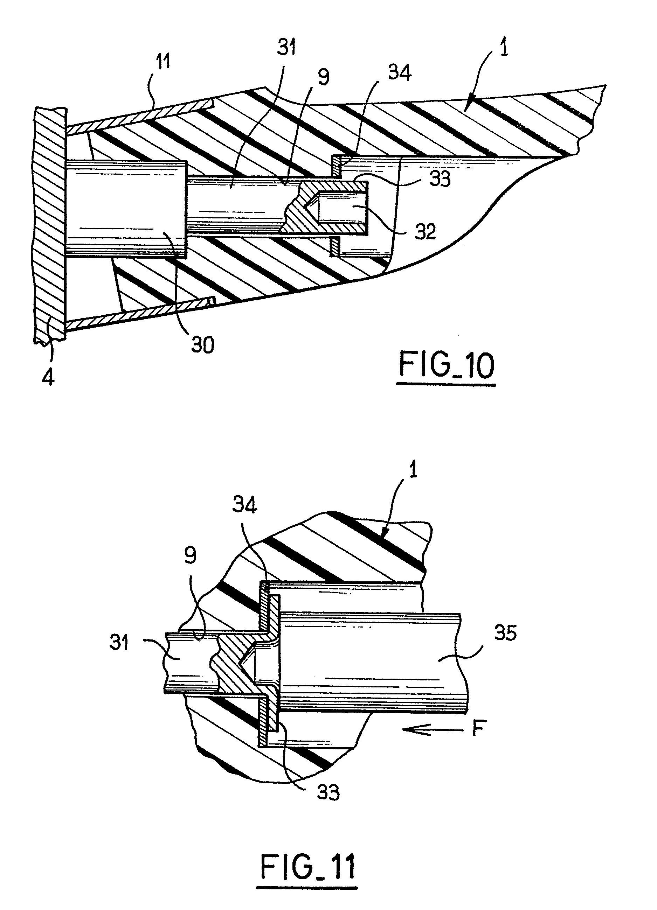

. la figure 10 est une vue analogue à la figure 1, concernant une autre version du dispositif conforme à l'invention;

. la figure 11 est une vue partielle analogue à la figure 10, après déformation de l'extrémité du rivet.

Dans la réalisation de la figure 1, le dispositif pour fixer la poignée 1 par exemple en bakélite à la casserole 2 comprend principalement un goujon 3 sensiblement cylindrique soudé à la paroi latérale 4 de la casserole et un rivet 5 engagé dans un alésage 6 de ce goujon 3, la tête 7 du rivet 5 rendant l'extrémité de la poignée 1 solidaire du goujon 3. A cet effet, le rivet 5 est engagé dans un orifice 9 ménagé dans l'extrêmité 8 de la poignée 1. Cette dernière comporte d'autre part une cavité 10 qui est emboîtée autour du goujon 3.

De plus, la fixation de la poignée 1 à la casserole 2 est consolidée par une embase métallique 11 qui est soudée à la paroi latérale 4 autour du goujon 3, et dans laquelle est emboîtée l'extrémité 8 de la poignée 1.

Comme on le voit sur les figures 2 et 3, à la périphérie du fond 12 de l'alésage 6 du goujon 3 est ménagée une gorge annulaire 13 coaxiale avec l'alésage 6 et dont le diamètre extérieur est supérieur à celui de cet alésage 6. Cette gorge 13 est tronconique et évasée vers l'extrémité 3a du goujon 3 qui est destinée à être fixée par soudage à la casserole 2.

L'extrémité du rivet 5 adjacente au fond 12 de l'alésage 6 du goujon 3 comporte un alésage axial 14 définissant une partie tubulaire 15. Cette dernière est destinée à pénétrer par déformation dans la gorge 13 sous l'effet d'une force F appliquée axialement sur la tête 7 du rivet 5, comme indiqué sur la figure 3.

La largeur $\underline{d}$ de la gorge 13 est sensiblement égale à l'épaisseur $\underline{e}$ de la paroi 15 qui définit la partie tubulaire du rivet 5.

La profondeur de la gorge 13 est au moins égale à l'épaisseur $\underline{e}$ de cette paroi 14. De préférence, cette profondeur est sensiblement égale au double de l'épaisseur $\underline{e}$ comme c'est le cas dans la réalisation représentée sur les figures 2 et 3.

Pour que la partie tubulaire 15 du rivet 5 puisse pénétrer dans la gorge 13, il est nécessaire que ce rivet 5 soit réalisé dans un métal ou alliage métallique non cassant et relativement déformable tel que l'aluminium ou l'acier doux.

Le choix du métal ou de l'alliage métallique constituant le goujon 3 dépend essentiellement de celui dans lequel est réalisée la casserole 2, compte tenu des possibilités de soudage entre ces métaux ou alliages. Ainsi, étant donné que la casserole 2 est généralement en acier ou en aluminium, le goujon 3 sera réalisé le plus souvent et préférablement en aluminium ou en acier.

Pour fixer la poignée 1 à la casserole 2, on procède comme suit: on emboîte l'extrémité 8 de la poignée dans l'embase métallique 11 puis on introduit le rivet 5 dans l'orifice 9 de la poignée 1 et dans l'alésage 6 du goujon 3 qui est soudé à la casserole 2.

On applique ensuite sur la tête 7 du rivet 5 une force axiale F comprise entre 500 et 2 000 kg, par exemple au moyen d'une presse ou d'un marteau vibreur.

Sous l'effet de cette force axiale F, la partie tubulaire 15 du rivet 5 pénètre en s'évasant vers l'extérieur dans la gorge 13 ménagée au fond de l'alésage 6 du goujon 13. En fin d'opération, la tête 7 du rivet 4 prend appui contre la poignée 1 à l'entrée de l'orifice 9, en supprimant ainsi tout jeu axial entre la poignée 1, l'embase 11 et le goujon 3.

La fixation ainsi obtenue est irréversible. Seule une traction très élevée exercée suivant l'axe de la poignée 1 pourrait éventuellement entraîner un dégagement de la partie tubulaire 15 par rapport à la gorge annulaire 13. Toutefois, dans les conditions d'utilisation normales et même accidentelles d'une casserole, une telle traction axiale ne peut nullement survenir. La fixation ainsi obtenue est par conséquent extrêmement fiable.

Dans la réalisation représentée sur les figures 4 à 7, le goujon 16 comporte un perçage 18 qui le traverse de part en part perpendiculairement à l'axe de son alésage 17. Ce perçage 18 débouche radialement à l'intérieur de l'alésage 17 et est situé à proximité du fond 19 de ce dernier. Dans l'exemple représenté, ce perçage 18 présente une section voisine de celle de l'alésage 17.

Par ailleurs, le rivet 20 présente sur sa partie destinée à être engagée dans l'alésage 17 du goujon 16 des stries annulaires 21a (voir figure 5) dont les arêtes vives affleurent la surface cylindrique et lisse de l'alésage 17.

Pour fixer le rivet 20 dans l'alésage 17 du goujon 16, on applique comme précédemment sur la tête 20a du rivet 20 une force axiale F comprise entre 500 et 2 000 kg. Sous l'effet de cette force, l'extrémité 20b du rivet 20 prend appui contre le fond 19 de l'alésage 17 et sa surface 20c située en regard des perçages 18 se dilate en pénétrant partiellement dans ces derniers. La dilatation de la surface 20c du rivet 20 entraîne corrélativement une légère expansion de l'alésage 17 à l'entrée 17a des perçages 18. Il en résulte également un enfoncement des stries à arêtes vives 21a du rivet 20 dans la surface de l'alésage 17 au niveau des entrées 17a des perçages 18.

Grâce à la pénétration de la surface du rivet dans les perçages 18 et complémentairement du fait de l'enfoncement des stries 21a dans la surface de l'alésage 17 autour de ces perçages 18, on obtient une excellente fixation axiale du rivet 20 dans le goujon 16.

Comme précédemment, cette fixation est obtenue en une seule opération sans aucun taraudage ni filetage.

Comme dans le cas de la réalisation des figures 1 à 3, il est avantageux que le goujon 16 et le rivet 20 soient réalisés en aluminium, en acier doux ou en métal ou alliage présentant des propriétés mécaniques analogues à ces derniers.

La réalisation selon les figures 4 à 7 présente l'avantage d'être un peu plus simple que celle des figures 1 à 3, car le perçage 18 est plus simple à exécuter que la gorge annulaire 13.

Cependant, la fixation obtenue dans le cas des figures 1 à 3 est généralement un peu plus sûre et plus fiable que dans le cas des figures 4 à 7.

Dans la réalisation des figures 8 et 9, au fond 23 de l'alésage 22 du goujon 21 est logée une bille métallique 24 de préférence en acier dur présentant un diamètre inférieur à celui de l'alésage 22. L'extrémité du rivet 25 engagée dans l'alésage 22 comporte un évidement axial 26 qui définit une partie tubulaire 27.

La différence entre le diamètre de la bille 24 et celui de l'alésage 22 est inférieur à deux fois l'épaisseur de la paroi 27 qui constitue la partie tubulaire du rivet 25. Ainsi, l'épaisseur de la paroi 27 de cette partie tubulaire est inférieure au jeu existant entre la bille 24 et l'alésage 22, en supposant que ce jeu soit régulièrement réparti autour de cette bille.

On voit d'autre part sur les figures 8 et 9, que le fond 23 de l'alésage 22 est une portion de sphère dont le rayon est légèrement supérieur à celui de la bille 24.

De plus, la surface latérale du rivet 25 porte des stries annulaires 28 à arêtes vives.

Comme dans le cas des réalisations précédentes, le goujon 21 et le rivet 25 sont réalisés de préférence en aluminium ou en acier doux.

Pour réaliser la fixation du rivet 25 dans l'alésage 22 du goujon 21, on procède comme suit:

On applique sur la tête du rivet 25 une force axiale de 500 à 2 000 kg. Sous l'effet de cette force, la partie tubulaire 27 du rivet 25 s'engage en se déformant autour de la bille 24, comme indiqué sur la figure 9, en épousant le profil de cette bille et celui du fond sphérique 23 de l'alésage 22.

Du fait que l'épaisseur de la paroi 27 de l'extrémité tubulaire du rivet 25 est plus faible que le jeu existant entre la bille 24 et l'alésage 22, cette paroi 27 tend à dilater la surface interne de l'alésage 22 dans la zone située au regard de la bille 24. Il en résulte un ancrage de la partie tubulaire 27 du rivet à la surface interne de l'alésage 22. Cet ancrage est renforcé du fait de l'enfoncement des stries 28 du rivet 25 dans la surface interne de l'alésage 22.

L'assemblage obtenu dans le cas de la réalisation selon les figures 8 et 9 est extrêmement simple du fait notamment que le goujon 21 comporte seulement un alésage axial dépourvu de tout perçage ou gorge complémentaire, l'expansion radiale de l'extrémité du rivet 25 étant obtenue simplement par l'interaction entre la force axiale et la bille 24.

Dans la réalisation des figures 10 et 11, le goujon 30 est réalisé d'une seule pièce avec le rivet 31. L'extrémité de ce rivet opposée au goujon 30 comporte un alésage axial 32 qui définit une partie tubulaire 33. Cette partie tubulaire 33 est déformable radialement vers l'extérieur en appliquant sur celle-ci au moyen de l'outil 35 une force axiale F. Cette partie tubulaire 33 se replie ainsi contre la rondelle facultative 34 appliquée à l'entrée de l'alésage 9 ménagé dans le corps de la poignée 1. On obtient de ce fait une fixation solide et irréversible de la poignée 1 à l'ensemble constitué par le rivet 31 et le goujon 30.

Bien entendu, l'invention n'est pas limitée aux exemples que l'on vient de décrire et on peut apporter à ces derniers de nombreuses modifications sans sortir du cadre de l'invention.

Ainsi, on peut envisager d'autres moyens que ceux décrits pour réaliser l'ancrage du rivet dans l'alésage du goujon, pourvu que ces moyens assurent une déformation radiale du rivet sous l'effet d'une force axiale appliquée sur ce dernier.

Ainsi, le perçage 18 ménagé dans l'alésage 17 du goujon 16 pourrait être remplacé par un évidement unique débouchant à l'intérieur de cet alésage.

Dans le cas de la réalisation selon les figures 1 à 3, l'expansion de la partie tubulaire 15 pourrait être facilitée en ménageant dans cette partie des fentes longitudinales s'étendant suivant l'axe du rivet 5.

Dans le cas de la réalisation des figures 8 et 9, les stries 28 du rivet 25 pourraient être remplacées par un filetage et l'alésage 22 du goujon 21 pourrait comporter un taraudage complémentaire. Dans un tel cas, la force axiale appliquée sur le rivet 25 serait mise en jeu par vissage du rivet 25 contre le fond de l'alésage du goujon. Un tel vissage serait toutefois irréversible du fait de l'écrasement de l'extrémité de la partie tubulaire 27 du rivet entre la surface interne de l'alésage 22 du goujon et la bille 24.

REVENDICATIONS

1. Dispositif pour fixer une poignée (1) à un ustensile culinaire (2) comprenant un goujon (3,16, 21,30) métallique destiné à être fixé à l'ustensile, et un rivet métallique (5,20,25,31) fixé ou destiné à être fixé à ce goujon, ce rivet comportant des moyens pour permettre la fixation de la poignée à ce rivet, caractérisé en ce que le rivet comporte à l'une de ses extrémités une partie (15,20c,22,33) déformable radialement sous l'effet d'une force (F) appliquée axialement sur le rivet et permettant de rendre ce rivet solidaire de la poignée et du goujon.

2. Dispositif pour fixer une poignée (1) à un ustensile culinaire (2), comprenant un goujon métallique (3,16,21) destiné à être fixé à l'ustensile, comportant un alésage (6,17,22) pour recevoir un rivet métallique (5,20,25) servant à fixer la poignée à ce goujon, le diamètre de ce rivet étant sensiblement identique à celui de cet alésage, caractérisé en ce que l'alésage du goujon (3,16,21) comporte des moyens qui assurent une déformation radiale du rivet (5,20, 25) et un ancrage de celui-ci dans l'alésage du goujon sous l'effet d'une force (F) appliquée axialement sur le rivet.

3. Dispositif conforme à la revendication 2, caractérisé en ce qu'à la périphérie du fond (12) de l'alésage (6) du rivet (5) est ménagée une gorge annulaire (13) coaxiale avec l'alésage (6), le diamètre extérieur de cette gorge (13) étant supérieur à celui de l'alésage (6), et en ce que l'extrémité du rivet (5) adjacente au fond (12) de l'alésage comporte un évidement axial (14) définissant une partie tubulaire (15), cette dernière étant destinée à pénétrer par déformation au moins en partie dans la gorge (13) sous l'effet d'une force (F) appliquée axialement sur le rivet (5).

4. Dispositif conforme à la revendication 3, caractérisé en ce que la gorge (13) est évasée vers l'extrémité (3a) du goujon (3) destinée à être fixée à l'ustensile (2).

5. Dispositif conforme à l'une quelconque des revendications 3 ou 4, caractérisé en ce que la largeur (d) de la gorge (13) est sensiblement égale à l'épaisseur (e) de la paroi (15) qui définit ladite partie tubulaire du rivet (5).

6. Dispositif conforme à la revendication 5, caractérisé en ce que la profondeur de la gorge (13) est au moins égale à l'épaisseur (e) de la paroi (15).

7. Dispositif conforme à la revendication 2, caractérisé en ce que la surface latérale de l'alésage (17) du goujon (16) comporte au moins un évidement (18), la surface latérale (20c) du rivet (20) étant destinée à pénétrer dans cet évidement (18) par déformation du métal, sous l'effet d'une force (F) appliquée sur le rivet (20).

8. Dispositif conforme à la revendication 7, caractérisé en ce que l'évidement est constitué par un perçage (18) du goujon (16) qui traverse radialement et de part en part ce dernier.

9. Dispositif conforme à l'une quelconque des revendications 7 ou 8, caractérisé en ce que l'évidement ou perçage (18) est situé à proximité du fond (19) de l'alésage (17).

10. Dispositif conforme à la revendication 2, caractérisé en ce qu'au fond (23) de l'alésage (22) du goujon (21) est logée une bille métallique (24) présentant un diamètre inférieur à celui de l'alésage (22), et en ce que l'extrémité du rivet (25) adjacente au fond de l'alésage (22) comporte un évidement axial (26) définissant une partie tubulaire (27), cette dernière étant destinée à s'engager autour de la bille (24) par déformation du métal, sous l'effet d'une force appliquée axialement sur le rivet (25).

11. Dispositif conforme à la revendication 10, caractérisé en ce que la différence entre le diamètre de la bille (24) et celui de l'alésage (22) est inférieure à deux fois l'épaisseur de la paroi (27) qui constitue ladite paroi tubulaire du rivet (25).

12. Dispositif conforme à l'une quelconque des revendications 10 ou 11, caractérisé en ce que le fond (23) de l'alésage (22) du goujon (21) est une portion de sphère dont le rayon est légèrement supérieur à celui de la bille (24).

13. Dispositif conforme à l'une quelconque des revendications 7 à 12, caractérisé en ce que la surface latérale du rivet (20,25) porte des stries annulaires à arêtes vives (21a,28).

14. Dispositif conforme à l'une quelconque des revendications 10 à 12, caractérisé en ce que le rivet est vissé dans l'alésage du goujon.

15. Dispositif conforme à la revendication 1, caractérisé en ce que le goujon (30) est réalisé d'une seule pièce avec le rivet (31) et en ce que l'extrémité de ce rivet opposée au goujon comporte un alésage axial (32) définissant une partie tubulaire (33) déformable radialement vers l'extérieur sous l'effet de la force (F).

16. Dispositif conforme à l'une quelconque des revendications 1 à 15, caractérisé en ce que le goujon (3,16,21,30) et/ou le rivet (5,20,25,31) sont réalisés en aluminium ou en acier doux ou dans un métal ou alliage métallique présentant une déformabilité comparable à celle des métaux précités.

17. Procédé pour fixer une poignée (1) à un ustensile culinaire (2), au moyen d'un dispositif conforme à l'une quelconque des revendications 2 à 14, dans lequel on engage le rivet (5,20,25) dans un orifice (9) ménagé à l'extrémité (8) de la poignée (1) et on introduit la partie dépassant du rivet dans l'alésage (6,17,22) du goujon (3,16,21), caractérisé en ce qu'on applique axialement sur la tête (7,20a) du rivet (5,20,25) une force comprise entre 500 et 2 000 kg environ.

FIG_1

FIG_2

FIG_3

FIG_4

21a
18
17
20a
21a
20
A
16
18
19

FIG_5

21a
21a

FIG_6

21a
16
20
18

FIG_7

16
18
20c
17a
F
21a
20b
20
17a
18
20c
19
20a

FIG_8

FIG_9

FIG_10

FIG_11

Office européen
des brevets

## RAPPORT DE RECHERCHE EUROPEENNE

EP 82 40 0275

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A- 779 748 (ALUMINIUM LUMIERE) <br> * En entier * | 1-4,17 | A 47 J 45/06 |
| X | US-A-1 482 765 (SANBORN) <br><br> * En entier * | 1-4,6, 17 | |
| X | DE-A-2 343 486 (DAN) <br><br> * En entier * | 1-6,10 ,15 | |
| A | DE-B-1 264 711 (BERK) <br> * En entier * | 1 | |
| A | GB-A- 472 714 (THE LONDON AL. CO.) <br> * En entier * | 1 | |
| A | CH-A- 189 614 (MERKER et CO.) <br> * Figure 4 * | 1,15 | DOMAINES TECHNIQUES RECHERCHES (Int. Cl. ³) <br><br> A 47 J <br> B 25 G <br> B 21 J |
| A | FR-A- 900 995 (LAUMONT) <br> * Page 3, lignes 22-30; figures 1,2 * | 1 | |

Le présent rapport de recherche a été établi pour toutes les revendications

| Lieu de la recherche | Date d'achèvement de la recherche | Examinateur |
|---|---|---|
| LA HAYE | 13-09-1982 | SCHARTZ J. |